Europäisches Patentamt

European Patent Office

Office européen des brevets

(19)

(11) Publication number: **0 298 141**
**A1**

# EUROPEAN PATENT APPLICATION

(12)

(21) Application number: 87109723.4

(22) Date of filing: 06.07.87

(51) Int. Cl.⁴: **B64D 39/00 , B64D 47/06**

(43) Date of publication of application:
**11.01.89** Bulletin **89/02**

(84) Designated Contracting States:
**DE FR GB IT NL**

(71) Applicant: **THE BOEING COMPANY**
**7755 East Marginal Way South**
**Seattle Washington 98124(US)**

(72) Inventor: **Newman, Frank J.**
**1807, E. 45th Street**
**Wichita Kansas 67216(US)**

(74) Representative: **Baillie, Iain Cameron et al**
**c/o Ladas & Parry Isartorplatz 5**
**D-8000 München 2(DE)**

(54) **Aircraft tanker trailing edge lights.**

㊐ Aircraft tanker trailing edge lights for attachment to wings of an aerial refueling tanker are electroluminescent strips 20 attached along the lower trailing edge of the wings of the tanker aircraft. The lights provide a set of cues such as roll attitude, pitch reference and relative distance for aiding a receiver pilot when mid-air aerial refueling from the tanker aircraft, while maintaining a low infrared profile to potential enemy sensors.

FIG. 1

## AIRCRAFT TANKER TRAILING EDGE LIGHTS

### BACKGROUND OF THE INVENTION

Heretofore, receiver pilots, when refueling in mid-air generally have insufficient visual reference cues particularly during night-time mid-air refueling. Attempts to improve this situation have failed to solve this problem. Some lighting attempts have provided only small areas or point light sources which fail to assist the receiver pilot with depth or distance perception. Traditionally lights used to assist mid-air refueling are placed on or near the fuselage centerline which make roll and pitch movements difficult to discern when viewed from the rear of the tanker aircraft.

Also, attempts to illuminate the underside of the tanker with incandescent lamps blind formation wingmen and make the tanker an easy-to-find visual and infrared target to potential enemy sensors.

Further, modern formation lights now use electroluminescence. However, these type lights are mounted on the lateral sides of the fuselage/empennage and cannot be viewed effectively from the rear, as during night-time refueling.

In the following U.S. patents; U.S. Patent No. 2,337,744 to Garstang, U.S. Patent No. 2,375,075 to Carruth, U.S. Patent No. 2,571,158 to Orlandsky, U.S. Patent No. 2,704,321 to Orlansky, U.S. Patent No. 3,710,311 to Avital, U.S. Patent No. 4,365,232 to Miller and U.S. Patent No. 4,521,835 to Meggs et al various types of aircraft wing tip lights, running lights and emergency lighting units are shown for applications on different types of aircraft. None of these prior art patents disclose the unique features and advantages of the subject invention.

### SUMMARY OF THE INVENTION

The subject invention provides an aerial refueling receiver pilot visual reference cues of a tanker aircraft. The cues include roll attitude, pitch reference and relative distance.

Through the use of an electroluminescent light source, a broader surface area becomes illuminated rather than small points, thereby providing better depth and distance perception.

The strips also generate very little heat, can be easily dimmed and provide a uniform soft light that is void of bright spots thereby having a very low infrared signature. The strips are available in flat, thin surfaces that will not impact the aerodynamics of the aircraft wing nor require extensive modification to the aircraft.

The subject tanker trailing edge lights include a plurality of electroluminescent stripes mounted on the lower trailing edge of the wings of an aerial refueling tanker aircraft. The strips may be in the range of 2 to 6 inches wide and can run the full span of the wing except for ailerons or other surfaces that may move during a refueling operation.

The advantages and objects of the invention will become evident from the following detailed description of the drawings when read in connection with the accompanying drawings which illustrate preferred embodiments of the invention.

### BRIEF DESCRIPTION OF THE DRAWINGS

Fig 1 illustrates a rear perspective view of an aerial refueling tanker with the subject invention mounted on the lower trailing edge of the wings.

Fig. 2 illustrates a bottom view of the aerial refueling tanker with the electroluminescent strips mounted on the inboard flaps, outboard flaps and low speed ailerons of the aircraft.

### DETAILED DESCRIPTION OF THE DRAWINGS

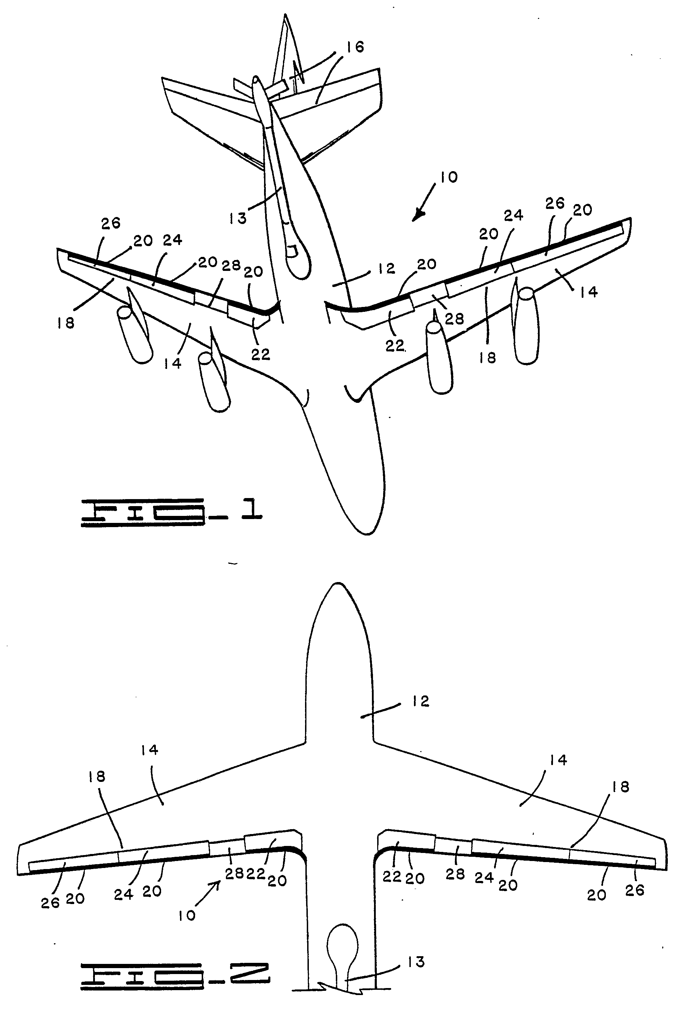

In Fig. 1 a perspective view of the aerial refueling tank is shown and designated as general reference numeral 10. The tanker includes a fuselage 12, with a downwardly extending refueling boom 13, wings 14 and tail section 16. attached to a lower trailing edge 18 of the wings 14 are a plurality of electroluminescent strips 20 disposed along the length thereof.

In Fig. 2 a bottom view of the aircraft 10 is shown with the electroluminescent strips 20 attached to inboard flaps 22, outboard flaps 24 and low speed ailerons 26. No electroluminescent strops are attached to high speed ailerons 28.

It should be noted that most transport and tanker aircraft have a swept-wing with a dihedral design. With portions of the trailing edge 18 illuminated as shown in Figs. 1 and 2 and with the dark background of night, the wing shape provides a flat "V" appearance when viewed from the rear and resembles an aircraft symbol used on many flight directors. This dihedral shape will enable receiver pilots to quickly recognize relative roll and pitch attitude of the tanker 10 ahead of the receiver aircraft and assist the pilot in detecting the initiation of a turn in a refueling pattern which is normally difficult to do at night. Therefore, the subject invention greatly improves distance perception.

Changes may be made in the construction and arrangement of the parts or elements of the embodiments as described herein without departing from the spirit or scope of the invention defined in the following claims.

## Claims

1. A tanker trailing edge lights, the lights adapted for attachment on a tanker aircraft, the lights comprising:

a plurality of electroluminescent strips, the strips attached to the lower trailing edge of wings of the tanker aircraft.

2. The lights as described in Claim 1 wherein the strips are in a range of 2 to 6 inches wide and run the full span of the wing except for high speed ailerons and other surfaces that may move during a refueling operation.

3. The lights as described in Claim 1 wherein the strips are attached to the inboard flaps and outboard flaps of the tanker aircraft.

4. A tanker trailing edge lights, the lights adapted for attachment on a tanker aircraft, the lights comprising:

a plurality of electroluminescent strips, the strips attached to the lower trailing edge of inboard and outboard flaps on wings of the tanker aircraft.

FIG_1

FIG_2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 299 442 (BUCKELEW) <br> * Column 4, line 65 - column 5, line 30 * | 1,4 | B 64 D 39/00 <br> B 64 D 47/06 |
| Y | US-A-4 633 376 (NEWMAN) <br> * Column 2, line 66 - column 3, line 5 * | 1,4 | |
| A | FR-A-2 377 936 (LHAUVIN) <br> * Page 3, lines 13-15 * | 1 | |

TECHNICAL FIELDS
SEARCHED (Int. Cl.4)

B 64 D

The present search report has been drawn up for all claims

| Place of search | Date of completion of the search | Examiner |
|---|---|---|
| THE HAGUE | 06-03-1988 | HAUGLUSTAINE H.P.M. |

EPO FORM 1503 03.82 (P0401)